# EUROPEAN PATENT APPLICATION

(11) **EP 3 832 594 A1**
(43) Date of publication of application: **09.06.2021**
(21) Application number: 19212911.2
(22) Date of filing: 02.12.2019
(51) Int. Cl.: G06T 7/00

(54) **A METHOD AND SYSTEM FOR PROCESSING MEDICAL IMAGES**

(71) Applicant: Koninklijke Philips N.V., 5656 AG Eindhoven (NL)
(72) Inventor: LENGA, Matthias, 5656 AE Eindhoven (NL); FRANZ, Astrid Ruth, 5656 AE Eindhoven (NL); BUERGER, Christian, 5656 AE Eindhoven (NL); VON BERG, Jens, 5656 AE Eindhoven (NL); KLINDER, Tobias, 5656 AE Eindhoven (NL); LORENZ, Cristian, 5656 AE Eindhoven (NL)
(74) Representative: Philips Intellectual Property & Standards

(57) **Abstract**

A method is provided for determining whether a medical image matches a specific description to aid a clinician in analyzing medical images in a quick and efficient manner. First, a neural network is trained with reference images, wherein the reference images match a specific description and have been aligned along a reference axis. The medical image is then aligned along the reference axis and is processed with a neural network. If an outlier is detected in one or more of the nodes of the neural network, the medical image is checked to determine whether the medical image matches the specific description.

## Description

### FIELD OF THE INVENTION

This invention relates to the field of medical imaging. It relates in particular to processing a medical image with a neural network to determine whether the medical image matches a specific description.

### BACKGROUND OF THE INVENTION

For trauma patients, it is important to analyze the overall status of all injuries as quickly as possible. Specifically, broken ribs can have adverse effects on the body. If one of the first three ribs at the top of the ribcage break or fracture and have a sharp end, they may tear or puncture the aorta or any other major blood vessel. A broken or fractured rib in the middle of the ribcage can puncture a lung and cause it to collapse, and a broken rib at the bottom of the rib cage may lacerate the spleen, liver or kidney.

The location of a trauma in some patients may be difficult to determine due to the patient being incapacitated or not being able to communicate sanely with the medical staff. In this case it may be necessary to take a set of medical images to determine where the trauma is. In some cases, it may be necessary to take medical images of many parts of the body and analyze each one to determine which parts, if any, have trauma.

Manual detection of rib fractures tends to be tedious, due to the large amount of data which can be created from, for example, a 3D CT scan of the ribs. Medical staff are usually very time pressured as the quicker they act, the more likely they are to be able to help the patient. However, medical staff must also consider other patients waiting. Hence due to the time pressure environment, rib fractures are very likely to be overlooked.

The manual detection of rib fractures from 3D CT datasets is tedious because a physician has to inspect dozens to hundreds of image slices. In addition, due to the angulation of the ribs in 3D space, a single rib is almost never located in a single transversal, sagittal, or coronal slice. In other words, one has to scroll through many slices to follow the appearance of one single rib, leading to a very time-consuming task.

Therefore, there is a need for a faster method of analyzing medical images and detecting unwanted conditions, such as broken or fractured ribs.

### SUMMARY OF THE INVENTION

The invention is defined by the claims.

According to examples in accordance with an aspect of the invention, there is provided a method for determining whether a medical image matches a specific description, comprising:
training a neural network with reference images, wherein the reference images match a specific description and have been aligned along a reference axis;
aligning a medical image along the reference axis;
processing the medical image with the neural network;
detecting an outlier in one or more of the nodes of the neural network; and
determining whether the medical image matches the specific description based on detecting one or more outliers in the neural network.

A neural network is initially trained with reference images that match a specific description. The reference images have all been aligned with respect to each other such that the neural network only has to learn the specific description when oriented along a reference axis, therefore reducing the amount of data needed to train the neural network. For example the specific description could be healthy ribs, and therefore the reference images would be images of healthy ribs which have been aligned along a rib tangent. A medical image is then aligned with respect to the same reference axis and processed with the neural network. The node values of the neural network are then checked for outliers. If the image processed by the neural network is of a healthy rib, then there will usually be no outliers in any of the nodes. However, if the image is not of a healthy rib, then there will be outliers in some of the nodes. Therefore, by detecting outliers in the neural network, such as a node value varying by more than 20% of the expected node value, it can be determined whether the image processed by the neural network matches the specific description.

In an example, if the neural network is trained with reference images of healthy ribs and the image to be processed by the neural network is of unhealthy ribs (e.g. fractured ribs) then the neural network will also contain outliers as it has only been trained with images of healthy ribs. Detecting outliers may consist of detecting node values which vary from the expected node values by a pre-determined amount, such as by 20%.

Alternatively, the specific description could be of a certain defect which is to be detected. For example, the specific description could be a fractured rib and the reference images could be of fractured ribs. In this case, only images of fractured ribs would not cause outliers. Therefore if no outliers are detected for a certain image, then this image must be of fractured ribs.

In some cases, it may be beneficial to determine whether the medical image matches the description by looking for outliers on certain nodes of the neural network, or by expecting a certain amount of outliers (e.g. more than one) in the neural network. In other cases, one outlier may be enough to determine whether the medical image matches the specific description. This may depend on the quality and quantity of the reference images as well as the quality of the medical image.

Aligning the medical image may comprise aligning an image axis in the image to a reference axis, wherein the reference axis is oriented in a pre-determined direction, and wherein the image axis is characterized by a visual feature of the medical image.

For example, an image of a rib cage can be taken from various angles. In order to reduce the amount of data needed to train a neural network it would be desirable for the neural network to only learn one orientation of the rib cage. However, when the neural network processes the medical image, it will only be able to process the image if it is also aligned to a reference axis. In this case, the reference axis could be a straight line which is directly vertical. Therefore, if an image of a rib cage has an image axis, which could be the straight line which follows the sternum, at a 30 degree angle clockwise to the vertical, and this image is to be processed by the neural network, it is first rotated by 30 degrees counter clockwise such that it is aligned with the reference axis.

Another example is when imaging individual ribs. In this case, the image axis may be a line which is directly tangential to the individual rib and the images from the ribs are then to be aligned such that the rib tangent is in a particular direction prior to being processed by the neural network.

The orientation of the reference axis may be determined by one or more of:
a user input; and
a feature in the reference images.

In order to determine the reference axis, a user may input an axis and thereafter align the reference images to the axis it has selected. In another example, the reference axis may be determined by a feature in the reference images, such as a spine, and thus a line following the orientation of the spine becomes the reference axis. Put another way, the reference axis may be selected by the user and/or from a reference image.

The methods described above may further comprise obtaining the reference images, wherein obtaining the reference images comprises:
obtaining a set of images;
detecting which images in the set of images match the specific description;
deriving an image segment from each of the images which match the specific description, wherein the image segment contains the data which matches the specific description;
determine an image axis for each image segment, wherein the image axis is characterized by a feature of the image;
aligning the image axis of each image segment to the reference axis; and
obtaining the reference images, wherein the reference images are the set of images segments after they have been aligned to the reference axis.

In order to train the neural network, only images which match the specific description may be used. This ensures the neural network has the specific description encoded in it throughout the weightings between the nodes. Once the images which match the specific description have been detected, an image segment from each image is derived. The image segments contain the data which matches the specific description. For example, a CT scan of the ribs may include the ribs and the spine. If the specific description is healthy ribs, then an image segment of each CT scan image is taken, where the segment may only include information of the rib and not of the spine. An image axis is then determined for each image segment. The image axis could, for example, be the tangent of a rib. The image axis of the image segment is subsequently aligned to the reference axis for each of the image segments. This ensures all the image segments are aligned with respect to each other. The reference images are thus the aligned image segments.

The neural network may be an auto-encoder/decoder type convolutional neural network which outputs a reconstructed image.

An auto-encoder type convolutional neural network can encode the specific description into a lower-dimensional latent space. This means that, for example, a 1000x1000-pixel image (with 1000000 input nodes) of healthy ribs can be dimensionally reduced to smaller set of nodes, such as 1000 latent nodes. The auto-decoder type convolutional neural network then uses the latent nodes to create and output a reconstructed image. The training objective of the auto-encoder/decoder is to minimize the reconstruction error, e.g. the L2 norm between the input and output image.

Detecting one or more outliers may comprise using a classifier algorithm to distinguish between normal and abnormal node values and wherein the classifier algorithm has been trained with the reference images to distinguish between normal and abnormal node values.

A classifier algorithm may be trained to learn which values are normal in which nodes from an auto-encoder type convolutional neural network when such neural network is trained with only the reference images. Therefore the classifier algorithm could detect outliers by analyzing the latent nodes in the neural network and determining whether the values in the latent nodes are normal or abnormal for the specific description.

Detecting one or more outliers may comprise comparing the input nodes with the output nodes from the auto-encoder/decoder type convolutional neural network.

In order to find outliers, it is also possible to compare the input image to the reconstructed image output by the neural network. As the neural network has been trained with only reference images based on a specific description, it will only be able to appropriately reconstruct an image which is also based on the specific description. For example, if the neural network is trained to reconstruct images of healthy ribs, then it will only be able to reconstruct images of healthy ribs. Therefore, if the input to the neural network is an image of a fractured rib, the neural network will not be able to appropriately reconstruct an image of the fractured ribs and instead output an image which varies significantly form the input image. By comparing the input nodes corresponding to the image to the output nodes, corresponding to the reconstructed image, it can be determined whether there are outliers in the output nodes.

Detecting one or more outliers may comprise using a local outlier factor, LOF, algorithm.

A local outlier factor (LOF) algorithm is based on local density of reference samples. An LOF would compare the value of a node from the neural network when it has processed a medical image to the densities of the node values from the reference images. By using an LOF, the variability of values in a node is considered when detecting outliers. This means that if the reference images were not of great quality, therefore each node value having a large variability, an outlier may only be detected for node values which are largely different from the values expected based on the reference images.

Detecting one or more outliers may comprise using a support vector machine.

A support vector machine (SVM) learning algorithm may also be used to detect outliers. SVMs can compare a data point in many dimensions (e.g. the values of a set of nodes) to reference data points from the reference images and calculate the largest separation between them. If the largest separation is significant, then the data point must be an outlier. For example a data point containing the values of three nodes from the neural network may be compared to the values of the same three nodes from the reference images. If the separation in three dimensional space of the data point from data points from the reference images is significant, then the data point must be an outlier.

The invention also provides a method for determining whether an image dataset contains an image of injured ribs, the method comprising:
determining whether each image in a image dataset matches a specific description, wherein the specific description is healthy ribs; and
based on an image not matching the specific description, checking the image to determine whether the image includes injured ribs.

For example, the manual detection of rib fractures from 3D CT scan datasets is usually tedious because a physician has to inspect dozens to hundreds of image slices when scrolling through the dataset. In addition, due to the angulation of the ribs in 3D space, a single rib is almost never located in a single transversal, sagittal, or coronal slice. In other words, one has to scroll through many slices to follow the appearance of one single rib, leading to a very time-consuming task. By initially determining, by use of a neural network, which images do contain deviations of healthy ribs, the time taken by the physician to inspect the images and detect a fracture is significantly reduced.

The invention also provides a computer program comprising code means for implementing any of the methods mentioned above when said program is run on a processing system.

The invention also provides a system for determining whether a medical image matches a specific description, comprising:
a processor, wherein the processor is configured to align the medical image to a reference axis;
a neural network for processing the aligned medical image, wherein the neural network has been trained with reference images and wherein the reference images match the specific description and have been aligned to a reference axis;
an outlier detector configured to detect an outlier in one or more of the nodes of the neural network; and
a post-processor configured to determine whether the medical image matches the specific description based on the outlier detector detecting one or more outliers in the neural network.

The system may further comprise a training module, wherein the training module is configured to train the neural network, comprising:
a set of images;
a processor for obtaining reference images, configured to:
   detect which images in the set of images match the specific description;
   align the set of images which match the specific description with respect to each other;
   derive an image segment from each of the images in the set of image which match the specific description, wherein the image segment contains the data in the image which matches the specific description; and
   obtain the reference images, wherein the reference images are the aligned image segments; and
a training processor configured to train the neural network with the reference images.

The neural network may be an auto-encoder/decoder type convolutional neural network and wherein the outlier detector may be one or more of:
a classifier algorithm;
a processor for comparing input and output nodes;
a local outlier factor algorithm; and
a support vector machine.

The invention also provides a system for determining whether a subject has an injured rib, the method comprising:
an imaging device for obtaining an image dataset of the ribs of a subject;
a system for determining whether each image in the image dataset matches a specific description, wherein the specific description is healthy ribs; and
a processor for determining whether the subject has an injured rib based on any one image from the image dataset not matching the specific description.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Figure 1 shows an example of a process used to determine whether a medical image matches a specific description;
Figure 2 shows an example of an auto-encode/decoder neural network;
Figure 3 shows an exemplary method for obtaining training data for the neural network;
Figure 4 shows examples of image patches of normal (healthy) ribs, which are aligned with the rib tangent;
Figure 5 shows an example of how an outlier may be detected from image patches along a rib centerline spline;
Figure 6 shows an example of how an outlier may be detected from the reconstructed image; and
Figure 7 shows an example of how to determine whether a medical image matches a specific description.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a method for determining whether a medical image matches a specific description to aid a clinician in analyzing medical images in a quick and efficient manner. First, a neural network is trained with reference images, wherein the reference images match a specific description and have been aligned along a reference axis. The medical image is then aligned along the reference axis and is processed with a neural network. If an outlier is detected in one or more of the nodes of the neural network, the medical image is checked to determine whether the medical image matches the specific description.

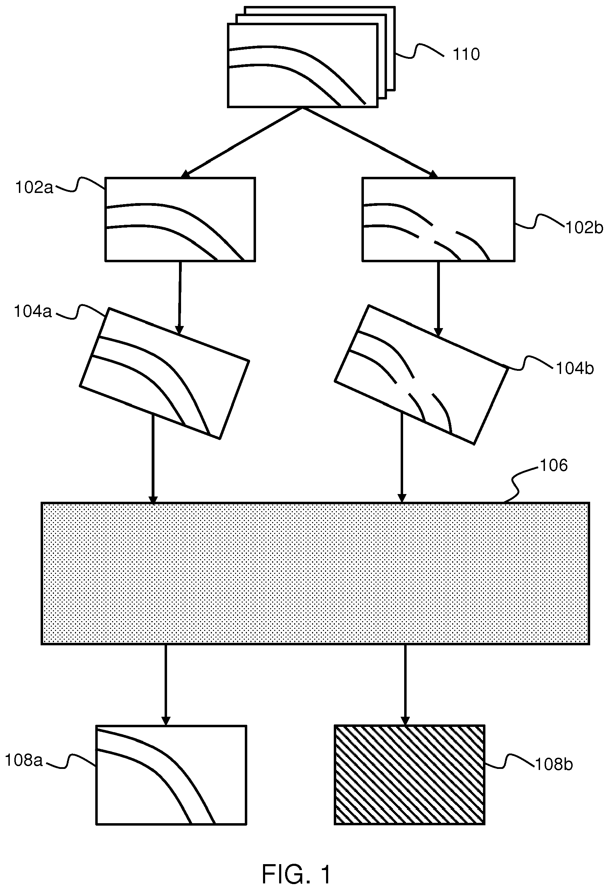

Figure 1 shows an example of a process used to determine whether a medical image matches a specific description. A set of images 110 (e.g. 3D CT dataset) is first provided for a subject. Each one of the medical images 102 are first aligned along a reference axis to make an aligned image 104. The reference axis may have been detected by a processor according to a feature of the images, or may have been selected by a user as detailed below. In the case when the set of images are of ribs, the reference axis may be a line which follows the shape of a rib in three dimensions, wherein the line has no vertical component with respect to the body and is at an azimuthal angle of 0 degrees with respect to the forward direction of the body (face forward direction). Each of the images may then be aligned such that the rib tangent of the rib in each of the images is aligned to the reference axis. In another example, when the images contain the spine, the reference axis may be a straight line directly vertical and each image maybe aligned such that the spine follows the direction of the reference axis.

An image processing algorithm may be used to derive a coordinate system for aligning the images. For example, a convolutional neural network may be used to segment he ribs. For each rib which has been segmented, a spline following the rib is obtained by tracing the segmentation masks from the convolutional neural network. Image center points are then sampled along the spline and the images are rotated such that the horizontal axis of the patch aligns is parallel to the spline tangent vector. In this example, all images processed with in this manner end up aligned and oriented in the same direction

In Figure 1 we see an example of a set of data 110, where the set of data is a 3D CT scan dataset of ribs. The dataset 110 may be of a patient which is believed to have a broken or fractured rib. Each medical image 102 from the dataset 110 is first aligned to a reference axis (e.g. the rib tangent) and then processed by a neural network 106. The neural network 106 is trained with data from healthy ribs therefore it will not be able to process an image of a broken or fractured rib 104b in the same way as it is able to process an image of a healthy rib 104a. The output of the neural network 106 may be a re-constructed image of the ribs 108. However, as the neural network has only been trained with images of healthy ribs, the neural network will not be able to properly reconstruct the image of a broken or fractured rib 102b.

By comparing the initial medical image 102 to the reconstructed image 108, a processor can detect which of the medical images 102 may contain an image of a broken (or fractured) rib 102b or of a normal (healthy) rib 102a. It is also possible for a processor to analyze the neural network 106 to detect any outliers in the nodes of the neural network 106.

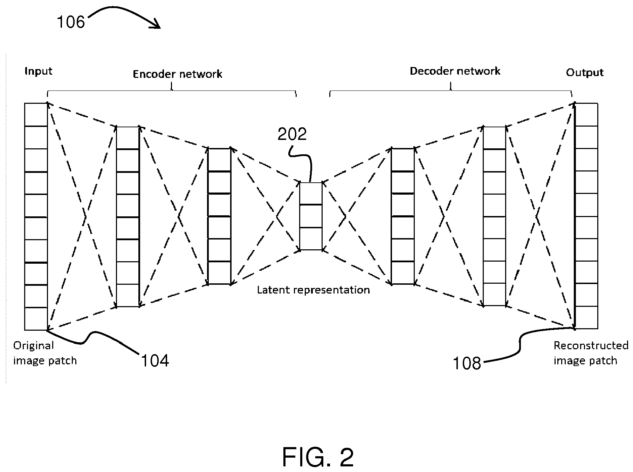

Figure 2 shows an example of an auto-encoder/decoder neural network. An auto-encoder neural network 106 reduces the input image 104 dimensionality to a low-dimensional latent space 202. An example algorithm is based on learning the normal rib appearance in CT datasets using an auto-encoder/decoder type network 106. Deviations from this normal appearance can then be detected using outlier detection methods, such as Local Outlier Factor (LOF) or One-Class SVMs. Automatic fracture localization enables the physician to concentrate on the pre-selected areas when searching for rib fractures in the 3D CT dataset.

With these normal rib images 102a, an auto-encoder type convolutional neural network 106 is trained which encodes the normal rib appearance into a lower-dimensional latent space 202. The training objective of the auto-encoder/decoder 106 is to minimize the reconstruction errors (e.g. the L2 norm between the input and output image). As described above, the auto-encoder/decoder 106 is trained only using images containing ribs without fractures 102a. Hence, the auto-encoder/decoder network 106 learns to encode the appearance of a (tangent-aligned) healthy rib in the low dimensional latent space 202 and to reconstruct the latter from the low-dimensional information.

Two options to use the trained auto-encoder/decoder network 106 for detecting possible rib fractures are:

### Outlier detection on the latent space:

It is proposed to sample images along the rib centerlines and to apply the auto-encoder/decoder network 106 to this sequence. For each image, the encoder network 106 yields a data point in the latent space 202. Via outlier detection (e.g. LOF, one-class SVM) it is decided, if this data point is associated to an image displaying a rib of normal appearance 102a or not. If not, this rib patch may contain a fracture or other abnormality, which may have to be inspected by a physician.

It is also possible to train a classifier to distinguish between normal and abnormal latent representations (e.g. distinguish between healthy and broken/fractured ribs). This supervised approach requires a certain amount of training examples from both classes.

### Outlier detection based on the reconstructed images:

Instead of pursuing the outlier detection on the latent space 202, it is also possible to detect abnormalities (fractures) based on the appearance of the reconstructed image 108. Due to the fact that the auto-encoder/decoder network 106 is only trained to encode healthy rib images 102a, it fails to properly encode images of broken (or fractured) ribs 102b. In other words, an abnormal rib image 108b cannot be described completely by the low-dimensional latent space 202, and hence the reconstruction result of the decoder network will significantly deviate from the input image. This detection may be based on suited similarity measures, unsupervised outlier detection methods or using a (supervised) classification algorithm. If such a deviation occurs, then the rib image 102 may contain a fracture or other abnormality, which may have to be inspected by a physician.

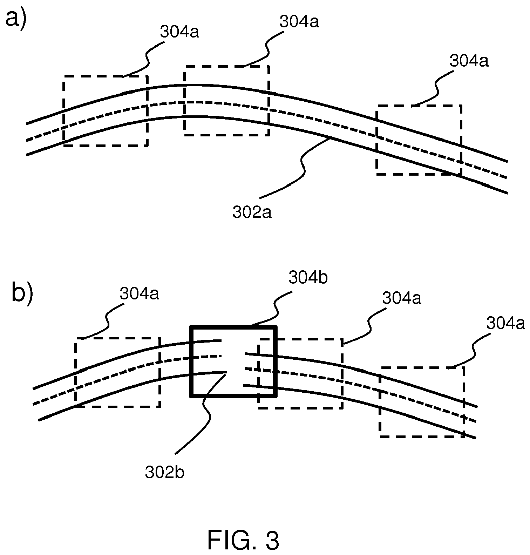

Figure 3 shows an exemplary method for obtaining reference images to train the neural network. The neural network 106 can be trained with normal (healthy) images 102a from the ribs 302. The reference images can be broken down into segments 304 (patches), wherein each patch 304 contains the relevant information (rib) for the neural network 106, and thus the image patches 304 can be used to train the neural network 106. Training image patches 304a are taken from normal ribs 302a, whereas patches near an annotated fracture 302b are avoided.

Based on an algorithm for rib centerline extraction, image patches 304 are sampled which are centered on the rib centerline and aligned with the rib tangent. The alignment with the rib tangent reduces the variability of anatomical rib appearances. In the training datasets, rib fractures are annotated, such that no patches 304 containing rib fractures 304b are sampled during the training process. Hence the input patches for the training phase are aligned patches of normal (healthy) ribs 304a.

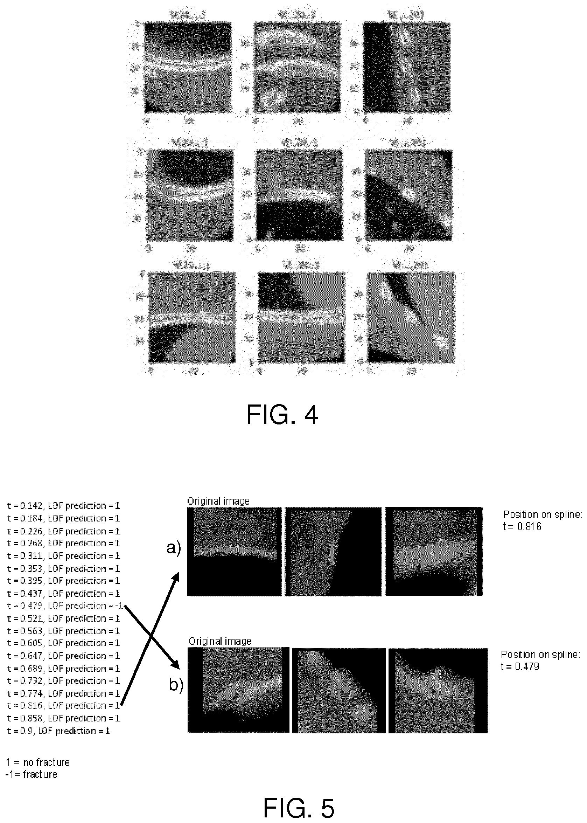

Figure 4 shows examples of image patches 304 of normal (healthy) ribs, which are aligned with the rib tangent. Each row shows the three orthogonal cuts through the rib. Three different ribs are shown.

Figure 5 shows an example of how an outlier may be detected from image patches 304 along a rib centerline spline. t∈[0,1] indicates the position on the spline measured in percentage of arc length. For each of the 19 t-points listed, an orientated image patch 304 was sampled and fed into an auto-encoder. The associated 19 latent representations were then fed into a LOF outlier detection algorithm. The unique fracture of the rib 302b, visible in patch b), was correctly detected. The other patches containing no fractures were correctly classified as well in patch , see for example patch a).

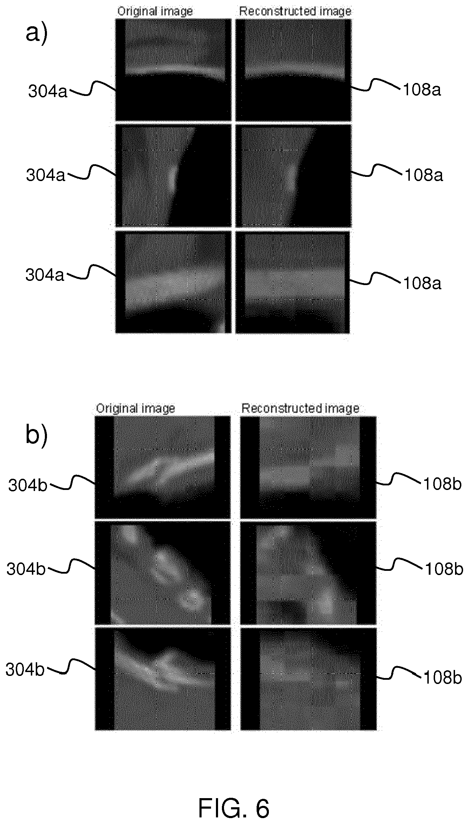

Figure 6 shows an example of how an outlier may be detected from the reconstructed image 108. It shows the original image patches 304 (left) and reconstructed image 108 (right) after applying an auto-encoder/decoder neural network 106 for a) a normal rib patch 304a and b) a broken rib patch 304b. Whereas the normal rib patch 304a is nicely reconstructed, the reconstruction of the broken rib patch 304b clearly shows reconstruction artefacts and significantly deviates from the input image. Therefore, by comparing the original image patches 304 to the reconstructed image 108, it can be determined whether a medical image patch 304, and the corresponding medical image 102, match a specific description (healthy ribs).

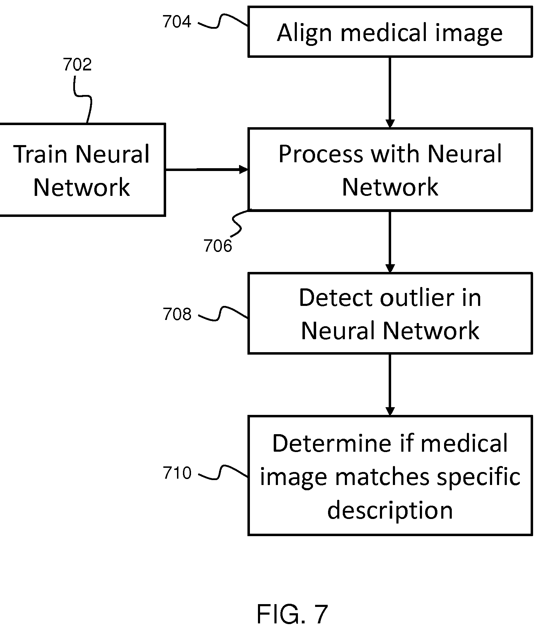

Figure 7 shows an example of how to determine whether a medical image matches a specific description. A neural network is initially trained with reference images that match a specific description in step 702. The reference images have all been aligned with respect to each other such that the neural network only has to learn the specific description when oriented along a reference axis, therefore reducing the amount of data needed to train the neural network. For example the specific description could be healthy ribs, and therefore the reference images would be images of healthy ribs which have been aligned along the rib tangent. A medical image is then aligned with respect to the reference images, in step 702, and processed with the neural network in step 706. The node values of the neural network are then checked for outliers in step 708. If the image processed by the neural network is of a healthy rib, then there will usually be no outliers in any of the nodes. However, if the image is not of a healthy rib, then there will be outliers in some of the nodes. Therefore, by detecting outliers in the neural network, it can be determined whether the image processed by the neural network matches the specific description in step 710.

The method as described may also be used to analyze medical images 102 from any part of the body. For example, it may be possible to have a neural network 106 which is trained to recognize many parts of the body, or many neural networks 106 may be used, each of which is trained to recognize a different part of the body. If a subject is incapacitated or cannot communicate which part of the body they believe has a trauma, medical images 102 may be taken for all parts of the body. The medical images 102 can then be processed with the (many) neural network(s) 106. The medical images 102 of the leg can be processed with a neural network 106 which has been trained with images of healthy legs, the medical images 102 may be processed with a neural network 106 which has been trained with images of healthy arms etc.

A machine-learning algorithm is any self-training algorithm that processes input data in order to produce or predict output data.

Suitable machine-learning algorithms for being employed in the present invention will be apparent to the skilled person. Examples of suitable machine-learning algorithms include decision tree algorithms and artificial neural networks. Other machine-learning algorithms such as logistic regression, support vector machines or Naive Bayesian model are suitable alternatives.

The structure of an artificial neural network (or, simply, neural network) is inspired by the human brain. Neural networks are comprised of layers, each layer comprising a plurality of neurons. Each neuron comprises a mathematical operation. In particular, each neuron may comprise a different weighted combination of a single type of transformation (e.g. the same type of transformation, sigmoid etc. but with different weightings). In the process of processing input data, the mathematical operation of each neuron is performed on the input data to produce a numerical output, and the outputs of each layer in the neural network are fed into the next layer sequentially. The final layer provides the output.

Methods of training a machine-learning algorithm are well known. Typically, such methods comprise obtaining a training dataset, comprising training input data entries and corresponding training output data entries. An initialized machine-learning algorithm is applied to each input data entry to generate predicted output data entries. An error between the predicted output data entries and corresponding training output data entries is used to modify the machine-learning algorithm. This process can be repeated until the error converges, and the predicted output data entries are sufficiently similar (e.g. ±1%) to the training output data entries. This is commonly known as a supervised learning technique.

For example, where the machine-learning algorithm is formed from a neural network, (weightings of) the mathematical operation of each neuron may be modified until the error converges. Known methods of modifying a neural network include gradient descent, backpropagation algorithms and so on.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

A single processor or other unit may fulfill the functions of several items recited in the claims.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to".

Any reference signs in the claims should not be construed as limiting the scope.

## Claims

1. A method for determining whether a medical image (102) matches a specific description, comprising:
training a neural network (106) with reference images, wherein the reference images match a specific description and have been aligned along a reference axis;
aligning a medical image (102) along the reference axis;
processing the medical image (102) with the neural network (106);
detecting an outlier in one or more of the nodes of the neural network (106); and
determining whether the medical image (102) matches the specific description based on detecting one or more outliers in the neural network (106).

2. A method as claimed in claim 1, wherein aligning the medical image (102) comprises aligning an image axis in the image to a reference axis, wherein the reference axis is oriented in a pre-determined direction, and wherein the image axis is **characterized by** a visual feature of the medical image (102).

3. A method as claimed in claim 2, wherein the orientation of the reference axis is determined by one or more of:
a user input; and
a feature in the reference images.

4. A method as claimed in any one of claims 1 to 3, further comprising obtaining the reference images, wherein obtaining the reference images comprises:
obtaining a set of images;
detecting which images in the set of images match the specific description;
deriving an image segment (304) from each of the images which match the specific description, wherein the image segment (304) contains the data which matches the specific description;
determine an image axis for each image segment (304), wherein the image axis is **characterized by** a feature of the image;
aligning the image axis of each image segment (304) to the reference axis; and
obtaining the reference images, wherein the reference images are the set of images segments (304) after they have been aligned to the reference axis.

5. A method as claimed in any of the preceding claims, wherein the neural network (106) is an auto-encoder/decoder type convolutional neural network which outputs a reconstructed image (108).

6. A method as claimed in claim 5, wherein detecting one or more outliers comprises using a classifier algorithm to distinguish between normal and abnormal node values and wherein the classifier algorithm has been trained with the reference images to distinguish between normal and abnormal node values.

7. A method as claimed in claim 5, wherein detecting one or more outliers comprises comparing the input nodes with the output nodes from the auto-encoder/decoder type convolutional neural network (106).

8. A method as claimed in claim 5, wherein detecting one or more outliers comprises using a local outlier factor, LOF, algorithm.

9. A method as claimed in claim 5, wherein detecting one or more outliers comprises using a support vector machine.

10. A method for determining whether an image dataset (110) contains an image of injured ribs (102b), the method comprising:
determining whether each medical image (102) in an image dataset (110) matches a specific description, as claimed in any of the preceding claims, wherein the specific description is healthy ribs; and
based on a medical image (102) not matching the specific description, checking the medical image (102) to determine whether the medical image (102) includes injured ribs (302b).

11. A computer program comprising code means for implementing the method of any one of claims 1 to 10 when said program is run on a processing system.

12. A system for determining whether a medical image (102) matches a specific description, comprising:
a processor, wherein the processor is configured to align the medical image (102) to a reference axis;
a neural network (106) for processing the aligned medical image (104), wherein the neural network (106) has been trained with reference images and wherein the reference images match the specific description and have been aligned to a reference axis;
an outlier detector configured to detect an outlier in one or more of the nodes of the neural network (106); and
a post-processor configured to determine whether the medical image (102) matches the specific description based on the outlier detector detecting one or more outliers in the neural network (106).

13. A system as claimed in claim 12, further comprising a training module, wherein the training module is configured to train the neural network (106), comprising:
a set of images;
a processor for obtaining reference images, configured to:
detect which images in the set of images match the specific description;
align the set of images which match the specific description with respect to each other;
derive an image segment (304) from each of the images in the set of image which match the specific description, wherein the image segment (304) contains the data in the image which matches the specific description; and
obtain the reference images, wherein the reference images are the aligned image segments; and
a training processor configured to train the neural network (106) with the reference images.

14. A system as claimed in any one of claims 11 or 13, wherein the neural network (106) is an auto-encoder type convolutional neural network and wherein the outlier detector is one or more of:
a classifier algorithm;
a processor for comparing input and output nodes;
a local outlier factor algorithm; and
a support vector machine.

15. A system for determining whether a subject has an injured rib (302b), the method comprising:
an imaging device for obtaining an image dataset (110) of the ribs (302) of a subject;
a system as claimed in any one of claims 12 to 14 for determining whether each medical image (102) in the image dataset (110) matches a specific description, wherein the specific description is healthy ribs (302a); and
a processor for determining whether the subject has an injured rib (302h) based on any one medical image (102) from the image dataset (110) not matching the specific description.
